# EUROPEAN PATENT APPLICATION

(11) **EP 4 517 965 A1**
(43) Date of publication of application: **05.03.2025**
(21) Application number: 24197648.9
(22) Date of filing: 30.08.2024
(51) Int. Cl.: H01M 50/213, H01M 50/244, H01M 50/264, H01M 50/291

(54) **BATTERY PACK**

(30) Priority: 30.08.2023 CN 202311111571; 30.08.2023 CN 202322353429 U; 30.08.2023 CN 202322353418 U; 30.08.2023 CN 202322353410 U; 30.08.2023 CN 202322353439 U; 03.04.2024 WO PCT/CN2024/085862
(71) Applicant: Eve Energy Co., Ltd., Huizhou, Guangdong 516006 (CN)
(72) Inventor: QIU, Wencong, Huizhou (CN); CHEN, Zhiwei, Huizhou (CN); CHEN, Zhaohai, Huizhou (CN)
(74) Representative: Murgitroyd & Company

(57) **Abstract**

Disclosed is a battery pack including a case body that includes a first chamber structure; at least one battery module disposed in the first chamber structure. The battery module includes a battery cell group and a surrounding frame surrounding the battery cell group. The surrounding frame is detachably connected to the case body.

## Description

### TECHNICAL FIELD

The present disclosure relates to the field of batteries, and more particularly, to a battery pack and a motor vehicle.

### BACKGROUND

Battery system including battery cells is a core component of new energy vehicles. When battery cells in a conventional battery system are grouped, the grouped battery cells are generally packaged into one or more battery modules by peripheral structural members, and these battery modules, each of which acts as one unit, are integrated into a battery case body. However, the integrated structure as described above is complex, and cumbersome in assembly process, time-consuming and labor-consuming, and the rigid strength of the entire battery pack is also weak.

Due to the above reasons, the CTP (Cell to Pack) battery packs have been created, which omits the step of manufacturing the battery modules, and instead provides battery packs directly from the battery cells, thereby eliminating the intermediate steps and improving the space utilization and the energy density of the battery packs. At present, a large amount of glue is used in most of the CTP battery packs to directly bind and fix a plurality of battery cells to the case body, so that the modules cannot be disassembled. Therefore, when any of the battery cells in the modules is failed, the entire battery pack needs to be replaced, and maintenance costs are greatly increased.

### SUMMARY

The present disclosure provides a battery pack and a motor vehicle, which can solve the above technical problems.

The present disclosure provides a battery pack including:
a case body including a first chamber structure;
at least one battery module disposed in the first chamber structure, in which the battery module includes a battery cell group and a surrounding frame for surrounding the battery cell group, and the surrounding frame is detachably connected to the case body.

The present disclosure also provides a motor vehicle including the battery pack as described above.

### BENEFICIAL EFFECT

The present disclosure provides an advantageous effect that, by surrounding the battery cell group of the battery pack according to the present disclosure using the surrounding frame, and detachably connecting the surrounding frame to the case body, when a battery cell group is failed, the failed battery cell group is only taken out from the surrounding frame and repaired or replaced without replacing the entire battery pack, thereby reducing the maintenance cost and improving the maintenance efficiency.

### BRIEF DESCRIPTION OF THE DRAWINGS

FIG. 1 is a schematic diagram of a battery pack according to some embodiments of the present disclosure.
FIG. 2 is a schematic diagram of a first exploded view of a battery pack according to some embodiments of the present disclosure.
FIG. 3 is a schematic diagram of a second exploded view of a battery pack according to some embodiments of the present disclosure.
FIG. 4 is a schematic diagram of a third exploded view of a battery pack according to some embodiments of the present disclosure.
FIG. 5 is a schematic diagram of a case body in a battery pack according to some embodiments of the present disclosure.
FIG. 6 is a schematic exploded view of a case body in a battery pack according to some embodiments of the present disclosure.
FIG. 7 is a schematic exploded view of a case frame (11) in a case body according to some embodiments of the present disclosure.
FIG. 8 is a schematic diagram of a battery cell group in a battery pack according to some embodiments of the present disclosure.
FIG. 9 is a schematic exploded view of a battery cell group in a battery pack according to some embodiments of the present disclosure.
FIG. 10 is a schematic exploded view of a CCS assembly in a battery cell group according to some embodiments of the present disclosure.
FIG. 11 is a schematic diagram of a bus bar in a CCS assembly according to some embodiments of the present disclosure.
FIG. 12 is a schematic diagram of a first conductive member in a bus bar according to some embodiments of the present disclosure.
FIG. 13 is a schematic diagram of a second conductive member in a bus bar according to some embodiments of the present disclosure.
FIG. 14 is a schematic diagram of a third conductive member in a bus bar according to some embodiments of the present disclosure.
FIG. 15 is a schematic diagram for the assembling a base plate and a plurality of surrounding beams in a battery cell group according to some embodiments of the present disclosure.
FIG. 16 is a schematic diagram of a battery pack according to some embodiments of the present disclosure.
FIG. 17 is a schematic diagram showing a structure of a battery pack in which a top cover of a case body is hidden, according to some embodiments of the present disclosure.
FIG. 18 is a schematic exploded view of an output electrode base according to some embodiments of the present disclosure.
FIG. 19 is a schematic diagram of an output t electrode base according to some embodiments of the present disclosure.
FIG. 20 is a schematic diagram of a bottom of the output electrode base according to some embodiments of the present disclosure.
FIG. 21 is a top view of an output electrode base according to some embodiments of the present disclosure.
FIG. 22 is a schematic cross-sectional view taken along A-A in FIG. 21.
FIG. 23 is a schematic exploded view of a partial structure of a battery pack according to some embodiments of the present disclosure.
FIG. 24 is a schematic exploded view of a battery case body and an output electrode base in a battery pack according to some embodiments of the present disclosure.

### List of reference numerals:

1. Case body; 11. Case frame (11); 11a. First frame; 11b. Second frame; 11c. First chamber structure; 11d. Second chamber structure; 111. First side beam; 112. Second side beam; 113. Mortise and tenon joint structure; 1131. Convex tenon; 1132. Sunk mortis; 114. Upper cover; 12. Inner beam; 121. Mounting groove; 1221. Third female groove; 13. Bottom guard plate; 131. First bottom guard plate; 132. Second bottom guard plate; 133. Liquid tube; 14. Electrical element; 151. First sealing member; 152. Second sealing member; 16. Positioning rib; 17. Reinforcing beam; 18. Reinforcing plate; 19. Output electrode base; 191. Third male buckle; 2. Battery module; 21. Surrounding frame; 211. First surrounding beam; 212. Second surrounding beam; 213. Glue holding groove; 22. Battery cell group; 221. Battery cell; 23. CCS assembly; 231. Insulating cover; 2311. First observation hole; 2312. Second observation hole; 232. Bus bar; 2321. Protrusion portion; 2322. Abutment portion; 2323. Bus bar unit; 23231. First conductive unit; 23232. Second conductive unit; 23233. Third conductive unit; 23234. Fourth conductive unit; 23235. First conductive row; 23236. Second conductive row; 23237. Third conductive row; 23238. First connecting portion; 23239. Second connecting portion; 23240. Third connecting portion; 2324. Connecting piece; 24. Base plate; 25. Snap-fit structure; 251. Male buckle; 252. Female groove; 26. Liquid cooling assembly; 261. Liquid cooling block; 262. Separation hole; 27. Second foam glue; 28. Thermal insulation layer; 3. First foam glue; 4. Support; 41. Insulating board; 42. Insulating beam; 5. Insulating base; 51. Limiting plate; 6. Conductive bracket; 61. Connecting member; 611. Annular flange; 612. Step structure; 62. Cavity; 64. Groove body; 7. Output electrode connecting piece; 8. Adapter bracket; 81. First adapter web; 82. Second adapter web.

### DETAILED DESCRIPTION OF EMBODIMENTS

### Embodiment 1

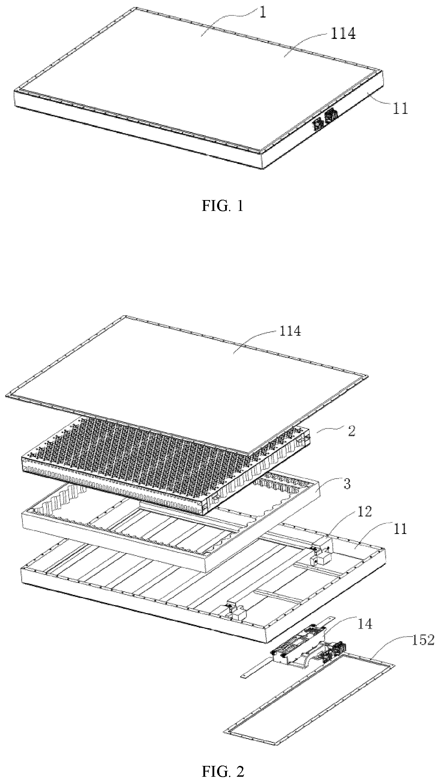

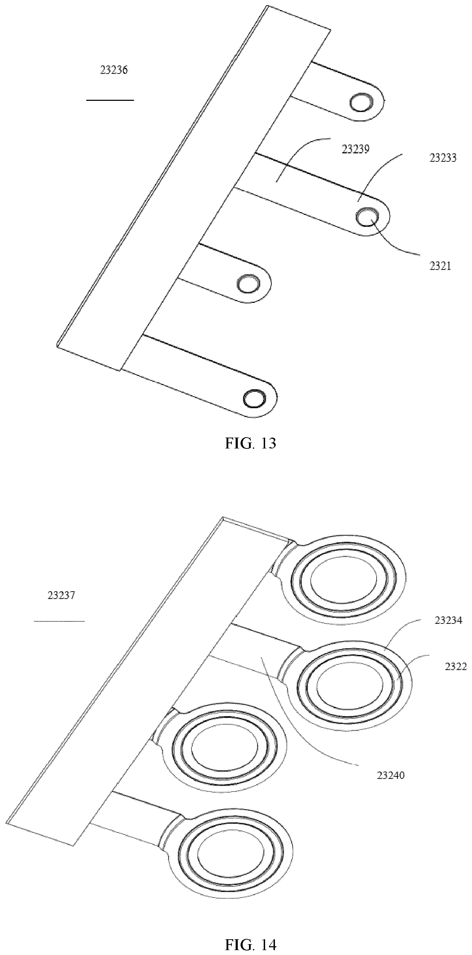

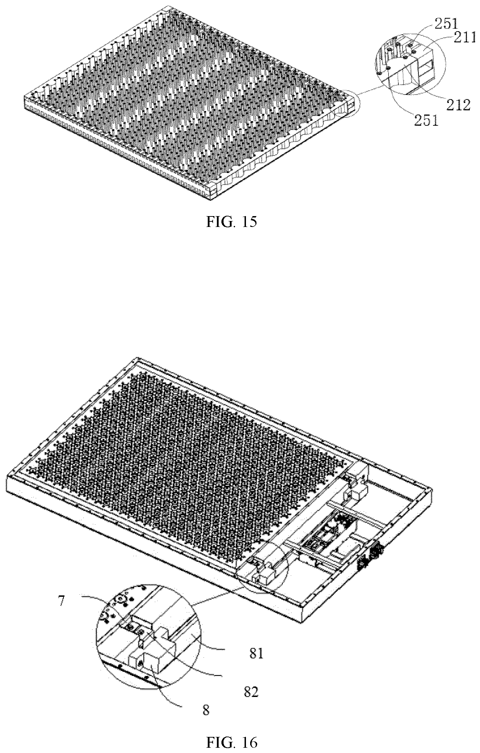

Referring to FIGs. 1 to 15, the present disclosure provides a battery pack including a case body 1 and at least one battery module 2 disposed in the case body 1.

The case body 1 may be of a rectangular shape. A first chamber structure 11c may be disposed in the case body 1. At least one battery module 2 is placed in the first chamber structure 11c. The battery module 2 includes a battery cell group 22 and a surrounding frame 21 surrounding the battery cell group 22. The surrounding frame 21 is detachably connected to the case body 1.

The battery pack further includes a fixing member for connecting the surrounding frame 21 to the case body 1. Preferably, the fixing member may be a first foam glue 3 that is capable of being decomposed by a glue remover. One or more glue-holding grooves 213 are disposed on a side of the surrounding frame 21 away from the battery cell group 22. A part of the first foam glue 3 is filled in the glue holding grooves 213, and another part of the first foam glue 3 is used to adhere the case body 1.

As a result, the surrounding frame 21 surrounds the peripheral side of the battery cell group 22 and is fixedly bound to the case body 1 by the first foam glue 3. When a battery cell group 22 fails, the failed battery cell group 22 can be taken out to be replaced by dissolving the first foam glue 3 using the glue remover. Moreover, by providing the glue holding grooves 213 on a side of the surrounding frame 21 away from the battery cell group 22, the first foam glue 3 may provide foam columns of different shapes during the foaming process to improve the bonding strength.

In other embodiments, the surrounding frame 21 may be fixed to the case body in a snap-fit manner. For example, a male buckle may be provided on the outer side of the surrounding frame 21, and a corresponding female groove may be provided on the case body 1. The connection between the surrounding frame 21 and the case body 1 is achieved by fixing the male buckle to the female groove, which is convenient for disassembly and assembly. When a battery cell group 22 is failed, the surrounding frame 21 can be disassembled to take out the failed battery cell group 22 for reparation and replacement, which is not limited thereto.

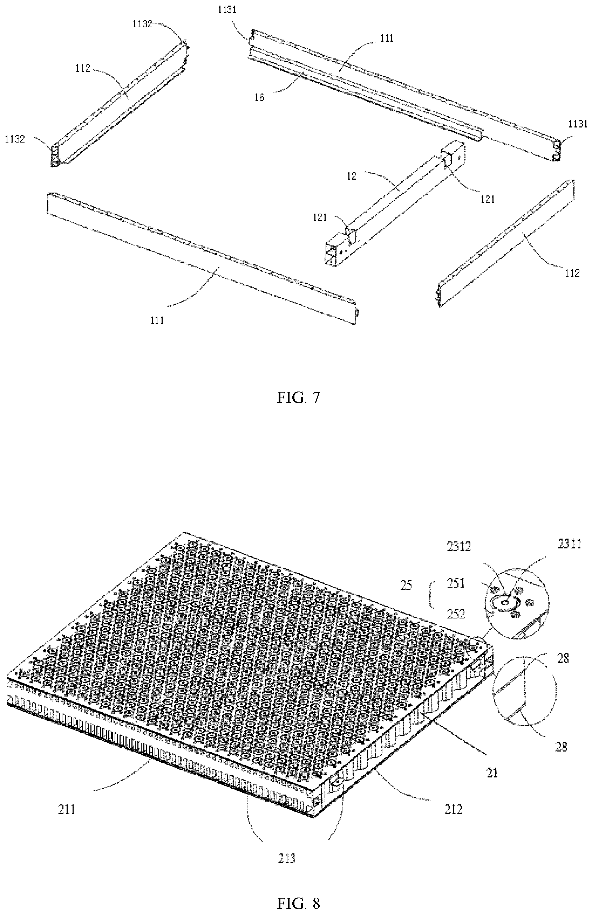

Referring to FIGs. 8 to 9, the surrounding frame 21 is formed of two first surrounding beams 211 spaced in parallel in the front-rear direction and two second surrounding beams 212 spaced in parallel in the left-right direction. The two first surrounding beams 211 and the two second surrounding beams 212 may be connected to each other by a mortise and tenon joint structure. The mortise and tenon joint structure may include a convex tenon and a sunk mortis, which are inserted with each other. For example, the sunk mortis may be disposed at ends of the first surrounding beam 211, and the convex tenon may be disposed at ends of the second surrounding beam 212. As a result, the connection of the first surrounding beams 211 and the second surrounding beams 212 can be realized by the insertion connection between the convex tenon and the sunk mortis.

In other embodiments, the position of the convex tenon may be interchanged with the position of the sunk mortis, as long as the same technical effect can be achieved, which is not limited thereto.

In the present embodiment, a plurality of first glue holding grooves in a rectangular shape are disposed on an outer side wall of the first surrounding beam 211 along the length direction thereof, and a plurality of second glue holding grooves in a wave shape are disposed on an outer side wall of the second surrounding beam 212 along the length direction thereof. In other embodiments, the glue holding grooves 213 may be provided in a triangular or other polygonal shape, which is not limited thereto.

Referring to FIGs. 8 to 15, the battery module 2 further includes a base plate 24 at the bottom of the battery cell group 22. The base plate 24 and the surrounding frame 21 form a cavity in which the battery cell group 22 is disposed.

Further, the battery pack further includes a second foam glue 27 filled in the cavity. The second foam glue 27 binds the battery cell group 22, the surrounding frame 21, and the base plate 24 together. When the second foam glue 27 is filled into the cavity, the surrounding frame 21 can function as a barrier for the foam glue, and forms an integral module together with the battery cell group 22 and the base plate 24 by the foam glue, thereby preventing the second foam glue 27 from overflowing.

Referring again to FIGs. 8 to 9, the battery module 2 further includes a thermal insulation layer 28 disposed on the base plate 24. For example, the thermal insulation layer 28 is a mica paper that is adhered to the top and bottom of the base plate 24. The configuration of the mica paper on the top and bottom of the base plate 24 may prevent the base plate 24 from damage due to thermal runaway, and, in turn, prevent influence on the battery cells 221.

In addition, the battery module 2 further includes a liquid cooling assembly 26 provided in the cavity. The liquid cooling assembly 26 includes a plurality of liquid cooling blocks 261 in a snake-like shape. A plurality of separation holes 262 are formed among adjacent liquid cooling blocks 261. The separation holes 262 are independent of each other and are configured to separate adjacent battery cells 221. The separation holes 262 completely wrap the peripheral wall of the battery cell 221. The configuration allows the battery cells 221 to be independent of each other. When thermal runaway occurs in one battery cell 221, other battery cells 221 are not affected by the presence of the separation holes 262, preventing the thermal runaway from spreading.

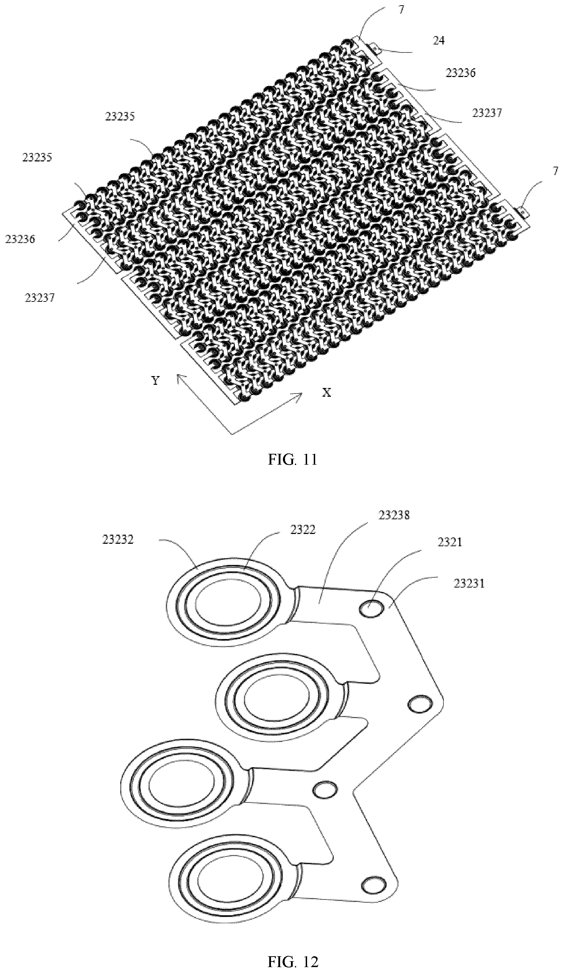

Referring to FIGs. 11 to 14, the battery pack further includes a plurality of bus bar units. The bus bar units include a plurality of first conductive rows 23235 arranged at intervals in a first direction X. Each of the first conductive rows 23235 includes a plurality of first conductive members arranged in a second direction Y and connected to each other. The first conductive member includes a first connecting portion 23238 and a first conductive unit 23231 and a second conductive unit 23232 respectively disposed at both ends of the first connecting portion 23238. The bottom of the first conductive unit 23231 is provided with a protrusion portion 2321 that is configured to connect to a positive electrode of one of two adjacent battery cells 221 in the first direction X, and the bottom of the second conductive unit 23232 is provided with an abutment portion 2322 that is configured to connect a negative electrode of the other of the two adjacent battery cells 221 in the first direction X.

In the present embodiment, the first conductive row 23235 includes four first conductive members arranged in the second direction Y and connected to each other. The battery cell group 22 includes a plurality of battery cell rows arranged in the second direction Y, and the four first conductive members cooperate with the battery cells 221 at corresponding positions in four battery cell rows, respectively, so that the battery cells 221 at corresponding positions in the four battery cell rows are connected by one of the first conductive rows 23235 in parallel. The first conductive unit 23231 of each first conductive member is connected to the positive electrode of one of adjacent battery cells 221 in a battery cell row, and the second conductive unit 23232 is connected to the negative electrode of another of adjacent battery cells 221 in the same battery cell row. That is, two adjacent battery cells 221 in the same battery cell row are connected in series by the first conductive member.

Further, each of the bus bar units further includes a second conductive row 23236 and a third conductive row 23237 provided at both ends of each of the first conductive rows 23235. The second conductive row 23236 includes a plurality of second conductive members arranged in the second direction Y and connected to each other. The second conductive member includes a second connecting portion 23239 and a third conductive unit 23233 disposed on a side of the second connecting portion 23239 facing the first conductive row 23235. The third conductive row 23237 includes a plurality of third conductive members arranged in the second direction Y and connected to each other. The third conductive member includes a third connecting portion 23240 and a fourth conductive unit 23234 disposed on a side of the third connecting portion 23240 facing the first conductive row 23235.

In the present embodiment, the second conductive row 23236 includes four second conductive members arranged in the second direction Y and connected to each other. The four second conductive members cooperate with the battery cells 221 at the corresponding positions in four battery cell rows, respectively, so that the battery cells 221 at the corresponding positions in the four battery cell rows are in parallel by one of the second conductive rows 23236. Similarly, the third conductive row 23237 includes four third conductive members arranged in the second direction Y and connected to each other. The four third conductive members cooperate with the battery cells 221 at the corresponding positions in four battery cell rows, respectively, so that the battery cells 221 at the corresponding positions in the four battery cell rows are in parallel by one of the third conductive rows 23237.

Referring again to FIG. 11, the present disclosure provides a plurality of bus bar units that are arranged at intervals in the second direction Y. Each of the plurality of bus bar units includes two end bus bars located at both edges and a plurality of intermediate bus bars between the two end bus bars. The second conductive row 23236 disposed at an end of one of the end bus bars is connected to the third conductive row 23237 of adjacent one of the intermediate bus bars, and the third conductive row 23237 disposed at the other end of the one of the end bus bars is connected to an output electrode connecting piece 7. The third conductive row 23237 disposed at an end of another end bus bar is connected to the second conductive row 23236 of adjacent one of the intermediate bus bars, and the second conductive row 23236 disposed at the other end of the another end bus bar is connected to another output electrode connecting piece 7. Further, the second conductive row 23236 in the one of the intermediate bus bars is connected to the third conductive row 23237 at the same side in adjacent one of the intermediate bus bars, and the third conductive row 23237 in the one of the intermediate bus bars is connected to the second conductive row 23236 at the same side in another adjacent one of the intermediate bus bars, thereby realizing the series connection of the plurality of bus bar units.

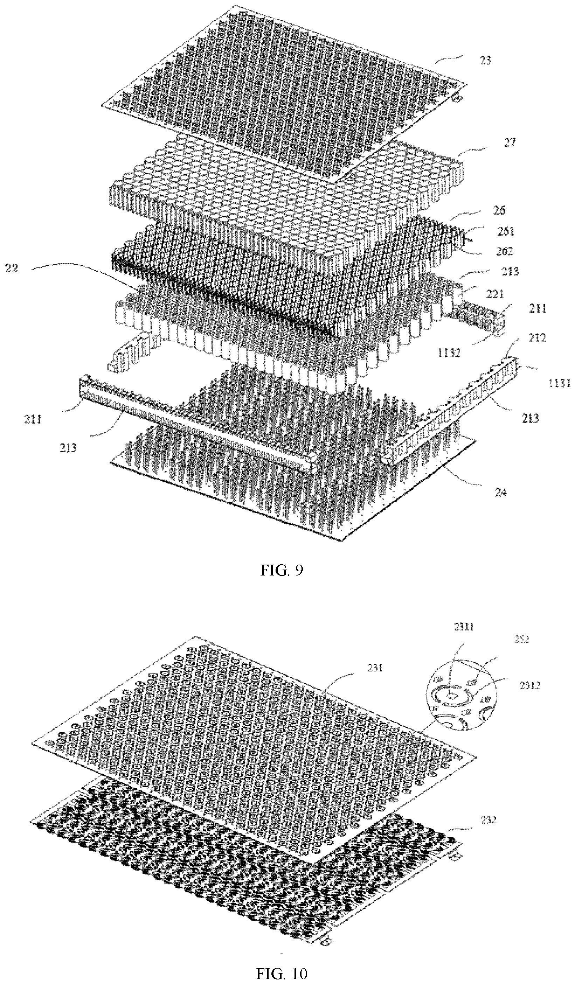

Referring to FIG. 10, the battery pack further includes an insulating cover 231. The insulating cover 231 is provided with a plurality of hollow first observation holes 2311 at positions corresponding to the protrusion portions 2321 on bus bars 232. The first observation holes 2311 are of a circular shape so as to match the shape of the protrusion portions 2321, thereby facilitating the observation of whether the protrusion portions 2321 are in sufficient contact with the positive electrodes of the battery cells 221. The insulating cover 231 is further provided with a plurality of hollow second observation holes 2312 at positions corresponding to the abutment portions 2322 on the bus bar 232. The second observation holes 2312 are of an arc shape so as to match the size of the abutment portions 2322, thereby facilitating the observation of whether the abutment portions 2322 are in sufficient contact with the negative electrodes of the battery cells 221.

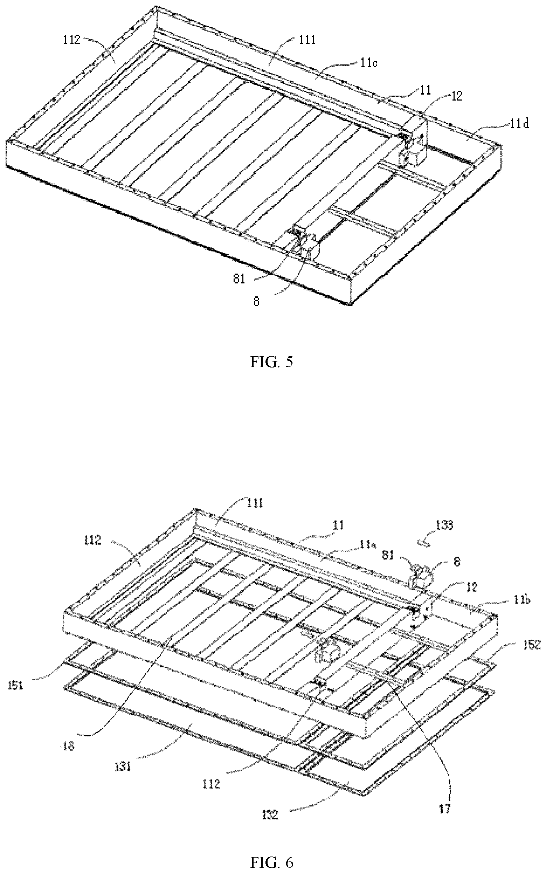

Referring to FIGs. 5 to 7, the case body 1 includes a case frame (11) 11, a bottom guard plate 13, and an inner beam 12. The case frame (11) 11 and the bottom guard plate 13 form a chamber structure, and the inner beam 12 is disposed in the chamber structure and is fixed to the case frame (11) 11 and/or the bottom guard plate 13. The inner beam 12 divides the chamber structure into a first chamber structure 11c and a second chamber structure 11d configured to place an electrical element 14. Moreover, the case body 1 includes an upper cover 114 that is capable of covering the case frame (11) 11 so as to seal the chamber structure.

Referring again to FIGs. 5 to 7, two ends of the inner beam 12 are connected to inner side walls of two first side beams 111, respectively, so that the inner beam 12 divides the case frame (11) 11 into a first frame 11a and a second frame 11b in sequence. Moreover, the bottom guard plate 13 includes a first bottom guard plate 131 that covers the bottom of the first frame 11a and a second bottom guard plate 132 that covers the bottom of the second frame 11b. The first frame 11a together with the first bottom guard plate 131 forms a first chamber structure 11c that is configured to receive the battery module 2, and the second frame 11b together with the second bottom guard plate 132 forms a second chamber structure 11d that is configured to receive the electrical element 14.

The bottom guard plate 13 is divided into the first bottom guard plate 131 and the second bottom guard plate 132, so that when an electrical element 14 fails and needs to be repaired, the second bottom guard plate 132 is removed and the failed electrical element 14 is disassembled for replacement or maintenance, which eliminates the need to remove the entire battery pack, thereby reducing the costs for maintenance and replacement of the electrical element 14, and improving the maintenance efficiency. A liquid tube 133 is disposed in the inner beam 12 and configured to communicate with the liquid cooling assembly 26 in the battery module 2. Accordingly, the inner beam 12 may be designed at the same height as the first side beam 111. That is, the surface of the inner beam 12 away from the bottom guard plate 13 is flush with the surface of the case frame (11) 11 away from the bottom guard plate 13, thereby improving the rigidity of the inner beam 12, and in turn improving the overall rigidity of the case frame (11) 11.

Further, a first sealing member 151 is provided between the first bottom guard plate 131 and the first frame 11a, and a second sealing member 152 is provided between the second bottom guard plate 132 and the second frame 11b. Therefore, the seal between the first and second bottom guard plates 131 and 132 and the case frame (11) 11 can be achieved by the first sealing member 151 and the second sealing member 152, respectively. The battery module 2 and the case body 1 is bound and sealed by the first foam glue 3, thereby forming a double-sealing structure to reduce the risk of gas leakage.

Referring to FIGs. 6 to 7, a positioning rib 16 is disposed on the inner side wall of the first side beam 111 and extends along the length direction of the first side beam 111. An end of the positioning rib 16 is connected to a side surface of the inner beam 12, and another end of the positioning rib 16 is connected to a side surface of the second side beam 112. The use of the positioning rib 16 can facilitate the positioning of the inner beam 12 and improve the assembly efficiency of the inner beam 12. Meanwhile, the use of the positioning rib 16 further improves the support strength of the first side beam 111.

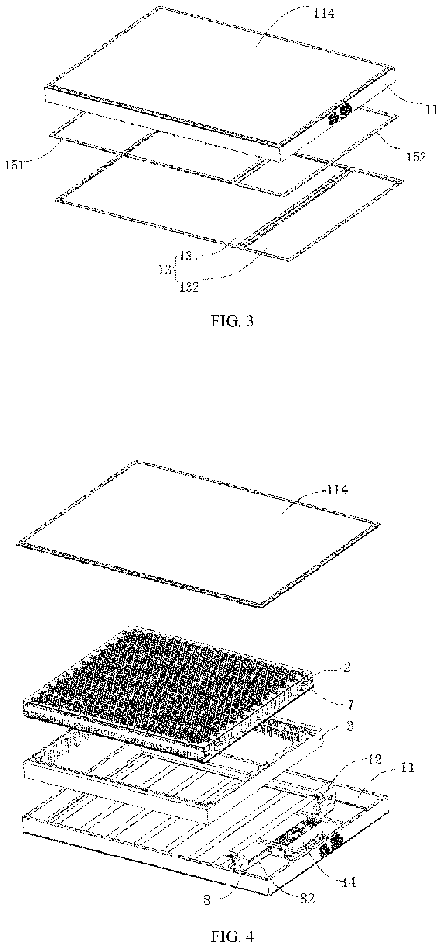

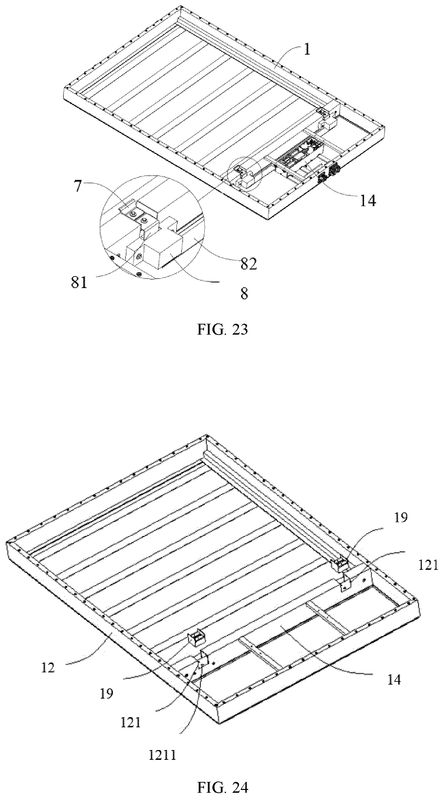

Referring to FIGs. 4 to 6 and 24, the case body 1 further includes one or more output electrode bases 19 disposed on the inner beam 12. The output electrode base 19 is configured to connect to the output electrode connecting piece 7 in the battery module 2. The output electrode base 19 includes a plastic base, a copper bracket disposed on the top of the plastic base, and two nuts disposed in the copper bracket at intervals. The output electrode connecting pieces 7 are connected to the nuts of the output electrode base 19 by bolts, so that the output electrode connecting pieces 7 are fixed to the copper bracket to realize electrical connection. Adapter brackets 8 are disposed on a side wall of the inner beam 12 and located in the second chamber structure. The adapter bracket 8 is connected to a first adapter web 81 that is connected to another nut of the output electrode base 19 by a bolt, so that the first adapter web 81 is fixed to the copper bracket for electrical connection. For example, the first adapter web 81 is a high-voltage copper bus bar.

Further, the electrical element 14 is a BUD system, and a second adapter web 82 is connected to the BUD system. The second adapter web 82 is connected to the first adapter web 81 for electrical connection. For example, the second adapter web 82 is a high-voltage copper bus bar. As a result, the output electrode connecting pieces 7 on the battery module 2 are electrically connected to the BUD system through the copper bracket of the output electrode base 19, the first adapter web 81, and the second adapter web 82 in sequence.

### Embodiment 2

Referring to FIGs. 1 to 16, the present disclosure provides a battery case body including a case frame (11) 11. The case frame (11) 11 includes two first side beams 111 arranged in parallel at intervals in the front-rear direction and in the shape of an elongated bar, and two second side beams 112 arranged in parallel at intervals in the left-right direction and in the shape of an elongated bar. The two first side beams 111 and the two second side beams 112 are spliced and welded to each other by mortise and tenon structures 113 to form the case frame (11) 11 in a rectangular shape. The mortise and tenon structure 113 includes a convex tenon 1131 and a sunk mortis 1132 which are inserted with each other. The convex tenon 1131 is disposed at ends of the first side beam 111, and the sunk mortis 1132 is disposed at ends of the second side beam 112. Thus, the mutual splicing of the first side beams 111 and the second side beams 112 can be realized by the mutual splicing of the convex tenons 1131 and the sunk mortises 1132.

The configuration of the mortise and tenon structures 113 to splice and weld the first side beams 111 and the second side beams 112 of the case frame (11) 11 improves the strength of the joints between the first side beams 111 and the second side beams 112, and further improves the overall strength of the case frame (11) 11.

In other embodiments, the first side beams 111 and the second side beams 112 may be provided in an L-shape or a C-shape, which is not limited thereto.

The battery case body 1 further includes a plurality of reinforcing beams 17 disposed in the second frame 1 1b at intervals, and a plurality of reinforcing plates 18 disposed in the first frame 11a at intervals. Each of the plurality of reinforcing beams 17 is disposed parallel to the first side beam 111, and each of the plurality of reinforcing plates 18 is disposed parallel to the second side beam. One end of the reinforcing beam 17 is connected to the inner side wall of the second side beam 112, and the other end of the reinforcing beam 17 is connected to the a side wall of the inner beam 12. One end of the reinforcing plate 18 is connected to the positioning rib 16 in one of the first side beams 111, and the other end of the reinforcing plate 18 is connected to the positioning rib 16 in the other one of the first side beams 111.

Therefore, by providing the plurality of reinforcing plates 18 in the first frame 11a and the plurality of reinforcing beams 17 in the second frame 11b, the strength of the battery case body 1 may be improved.

The present disclosure further provides a battery pack including the battery case body 1, the battery module 2, and the electrical element 14, wherein the battery module 2 is mounted in the first chamber structure 11c in the battery case body 1 through the first foam glue 3, and the electrical element 14 is mounted in the second chamber structure 11d in the battery case body 1.

### Embodiment 3

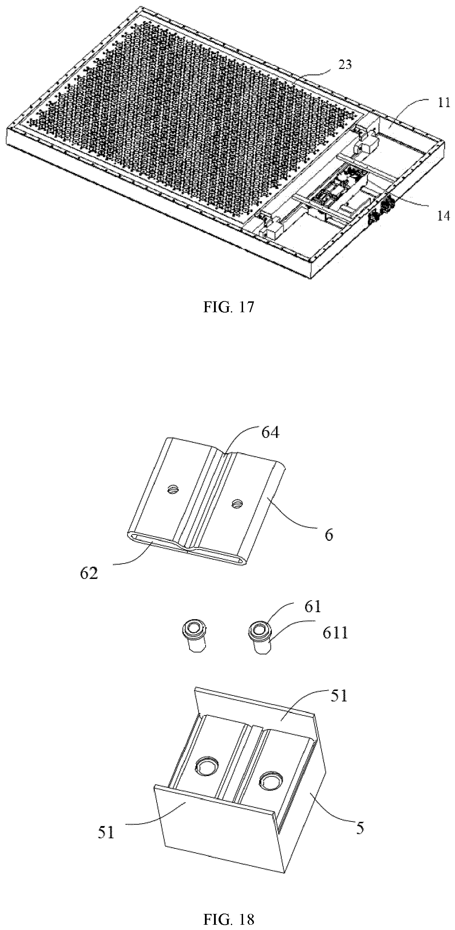

Referring to FIGs. 1 to 17, the present disclosure provides the battery module 2, including the battery cell group 22, a CCS assembly 23 disposed at the top of the battery cell group 22, and the base plate 24 disposed at the bottom of the battery cell group 22. The battery cell group 22 includes a plurality of battery cells 221. The CCS assembly 23 includes the bus bars 232 and the insulating cover 231 covering the top of the bus bars 232, wherein the plurality of battery cells 221 are connected in series or in parallel in the bus bars 232. The base plate 24 is connected to the insulating cover 231.

The bus bars 232 include a plurality of positive conductive units and a plurality of negative conductive units. The bottom of the positive conductive units is provided with protrusion portions 2321, and the bottom of the negative conductive units is provided with abutment portions 2322. When the insulating cover 231 is connected and fixed to the base plate 24, the insulating cover 231 drives the protrusion portions 2321 on the bus bars 232 to generate the interference connection to the positive electrodes of the plurality of battery cells 221 and deformation, and drives the abutment portions 2322 on the bus bars 232 to generate the interference connection to the negative electrodes of the plurality of battery cells 221 and deformation, thereby realizing the connection between the bus bars 232 and the battery cell group 22.

As a result, this welding-free connection method provides the connection between the CCS assembly 23 and the battery cell group 22, so that the inherent defects of the welding process are avoided, the reliability of the product performance is improved, and the welding equipment and the welding professionals are not required, thereby saving power and labor costs. In addition, the use of the welding-free connection is convenient in maintenance and disassembly.

The insulating cover 231 is made of a rubber or plastic material. In other embodiments, the insulating cover 231 may also be made of a composite with higher mechanical strength, electrical resistance to pressure, or temperature and flame resistance. The insulating cover 231 may be simply used as an insulating plate on the battery module 2, or may be a part of the outer package of the entire battery pack.

In the present embodiment, the battery cell 221 is a cyclinder cell, and its positive electrode is the protrusion portion 2321 on the top of the battery cell 221, and its negative electrode is a remaining housing of the battery cell 221 other than the top protrusion portion 2321 and the bottom.

Specifically, the bus bars 232 include the plurality of bus bar units arranged in the Y direction. The bus bar units include the plurality of first conductive rows 23235 arranged at intervals in the X direction. Each of the first conductive rows 23235 includes the plurality of first conductive members arranged in the Y direction and connected to each other. The first conductive member includes the first connecting portion 23238, and the first positive conductive unit and the first negative conductive unit respectively located at both ends of the first connecting portion 23238. The bottom of the first positive conductive unit is provided with the protrusion portion 2321 that is configured to connect to the positive electrode of one of two adjacent battery cells 221 in the X direction, and the bottom of the first negative conductive unit is provided with the abutment portion 2322 that is configured to connect to the negative electrode of the other of the two adjacent battery cells 221 in the X direction.

Further, the bus bar unit further includes the second conductive row 23236 and the third conductive row 23237 provided at both ends of each of the plurality of first conductive rows 23235, respectively. The second conductive row 23236 includes the plurality of second conductive members arranged in the Y direction and connected to each other. The second conductive member includes the second connecting portion 23239 and the second positive conductive unit located on the side of the second connecting portion 23239 facing the first conductive row 23235. The third conductive row 23237 includes the plurality of third conductive members arranged in the Y direction and connected to each other. The third conductive member includes the third connecting portion 23240 and the second negative conductive unit disposed on the side of the third connecting portion 23240 facing the first conductive row 23235.

The insulating cover 231 covers the tops of the four surrounding beams and seals the cavity. The insulating cover 231 is connected and fixed with the base plate 24 by a first snap-fit structure, and with the surrounding beams by a second snap-fit structure. Specifically, the first snap-fit structure includes a first male buckle and a first groove that are engaged with each other, in which the first groove is provided on the insulating cover 231, and the first male buckle is provided on the base plate 24 and passes through a gap between the battery cells 221. As a result, the connection between the insulating cover 231 and the base plate 24 can be realized by fastening the first male buckle to the first groove. The second snap-fit structure includes a second male buckle and a second groove that are engaged with each other, in which the second groove is provided at the edge of the insulating cover 231, and the second male buckle is provided on the surrounding beams. As a result, the connection between the insulating cover 231 and the surrounding beams can be realized by fastening the second male buckle to the second groove.

In the present embodiment, the first male buckle and the second male buckle have the same structure, and the first groove and the second groove also have the same structure. The length of the first male buckle is longer than that of the second male buckle.

In other embodiments, the positions of the first male buckle and the first groove may be interchanged. That is, the first groove is provided on the base plate 24, and the first male buckle is provided on the insulating cover 231, as long as this configuration achieves the same technical effect. Similarly, the positions of the second male buckle and the second groove may also be interchanged. That is, the second male buckle is provided on the surrounding beam, and the second groove is provided on the insulating cover 231, as long as this configuration also may achieve the same technical effect, which is not limited thereto.

The surrounding beams is disposed at the periphery of the base plate 24 and is gluely fixed by the first foam glue 3, so that the surrounding beams function as an barrier for the glue, and forms an integral module with the insulating cover 231 on the CCS assembly 23 and the base plate 24, thereby preventing the first foam glue 3 from overflowing.

The battery module 2 further includes the thermal insulation layer 28 provided on the base plate 24. For example, the thermal insulation layer 28 is a mica paper which is adhered to the top and bottom of the base plate 24. As a result, the configuration of the mica paper on the top and bottom of the base plate 24 may prevent the base plate 24 from damage due to thermal runaway, and, in turn, prevent influence on the battery cells 22.

The present disclosure also provides a battery pack including a case body 1, and a battery module 2 as described above and a BUD system provided in the case body 1. The battery module 2 is provided in the first frame 11a, and the BUD system is provided in the second frame 11b.

### Embodiment 4

Referring to FIGs. 1 to 17, the present disclosure provides a CCS assembly 23 including bus bars 232 and an insulating cover 231 covering the bus bars 232. The bus bars 232 include a plurality of bus bar units disposed at intervals along the second direction Y. The bus bar unit include a first conductive unit 23231 and a second conductive unit 23232. The first conductive unit 23231 is provided with the protrusion portion 2321 that is configured to abut against the first electrode of the battery cell 221, and the second conductive unit 23232 is provided with the abutment portion 2322 that is configured to abut against the second electrode of the battery cell 221. For example, the abutment portion 2322 is an annular rib.

In the present embodiment, the battery cell 221 is a cyclinder cell, and the first electrode is a positive electrode of the battery cell 221, that is, the protrusion portion 2321 on the top of the battery cell 221. The second electrode is the negative electrode of the battery cell, that is, the remaining housing of the battery cell 221 other than the top protrusion portion and the bottom.

The insulating cover 231 is configured to be connected and fixed to a support 4 of the battery pack that is made of a rubber or plastic material. When the insulating cover 231 is connected and fixed to the support 4, the insulating cover 231 drives the protrusion portions 2321 on the bus bars 232 to generate the interference connection to the top of the plurality of battery cells 221 and deformation, and drives the protrusion ribs on the bus bars 232 to generate the interference connection to the remaining housing other than the top of the battery cells 221 and deformation, thereby realizing the connection between the bus bars 232 and the electrodes of the battery cells 221.

In other embodiments, the protrusion rib may be disposed on the outer edge of the top of the battery cell 221 and forms the interference connection to each other. The protrusion ribs may be of an arc shape or other shapes, which is not limited thereto.

According to some embodiments of the present disclosure, the connection between the CCS assembly 23 and the battery module 2 is simple in structure, and convenient in maintenance and disassembly.

The insulating cover 231 is made of a rubber or plastic material. In other embodiments, the insulating cover 231 may also be made of a composite with higher mechanical strength, electrical resistance to pressure, or temperature and flame resistance. The insulating cover 231 may be used simply as the insulating plate of the battery pack, or may be a part of the outer package of the entire battery pack.

The present disclosure also provides the battery pack including the CCS assembly 23, the battery module 2, and the support 4. The support 4 includes an insulating board 41 and four insulating beams 42 disposed around the insulating board 41, in which the insulating board 41 and the insulating beams 42 are made of a rubber or plastic material. The insulating cover 231 is fixed to the insulating board 41 and the four insulating beams 42 by a snap-fit structure 25.

The battery module 2 includes the plurality of battery cell assemblies corresponding to the plurality of bus bar units. The battery cell assembly includes a plurality of battery cell rows arranged at intervals along the second direction Y. The battery cell row comprises a plurality of battery cells 221 arranged at intervals along the first direction X.

### Embodiment 5

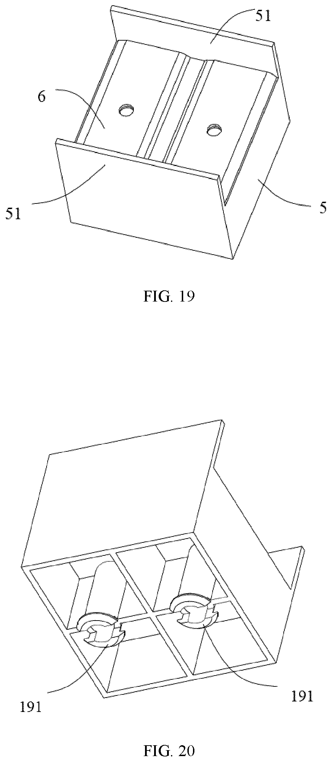

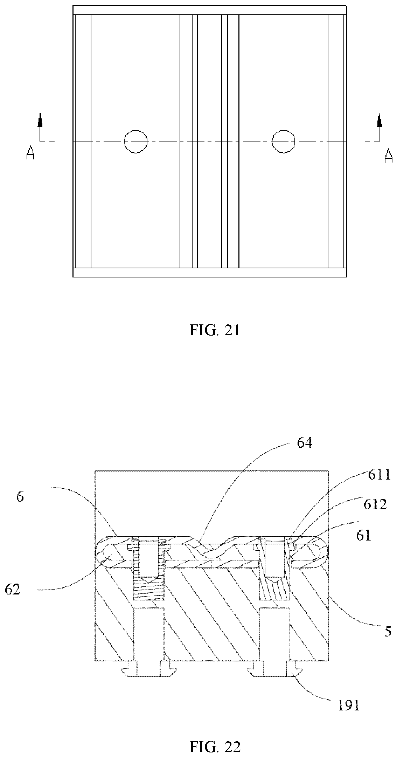

Referring to FIGs. 1 to 24, the present disclosure provides the output electrode bases 19 that are configured to provide insulation protection for the output electrode connecting piece 7 in a battery module. Specifically, the output electrode base 19 includes the insulating base 5 and a conductive bracket 6 fixed to the insulating base 5. The conductive bracket 6 is provided with connecting members 61, and a part of the connecting member 61 is located in the insulating base 5. In addition, at least one of the connecting member 61 and the conductive bracket 6 has a step structure that is configured to limit movement of the connecting member 61 in the axial direction so as to prevent the connecting member 61 from being pulled off and in turn to prevent from affecting the locking reliability.

The connecting member 61 is a press riveting nut. The top of the press riveting nut is provided with an annular flange 611, which has a diameter less than that of the nut of the press riveting nut so as to form a step structure. The step structure is embedded in the conductive bracket 6 so as to limit the movement of the connecting member 61 in the axial direction.

When the connecting member 61 is subjected to a force, the step structure makes the connecting member 61 less prone to loosening in the axial direction, thereby improving the torsion resistance and the pull-out resistance of the connecting member 61 on the conductive bracket 6, and further improving the connection reliability between the connecting member 61 and the conductive bracket 6.

In other embodiments, a step groove may be provided in the conductive bracket 6 to form a step structure. The connecting member 61 may be engaged in the step structure so as to limit the movement of the connecting member 61 in the axial direction, thereby achieving the same technical effect, which is not limited thereto.

The insulating base 5 may be made of a rubber or plastic material. The conductive bracket 6 is a copper bracket. The press riveting nut is fixed in the conductive bracket 6 by a staking process. An upper portion of the press riveting nut is embedded in the conductive bracket 6, and a lower portion of the press riveting nut passes through the conductive bracket 6 and extends into the insulating base 5. The press riveting nut may be integrally injection molded with the insulating base 5 to increase the supporting strength of the press riveting nut.

The connecting members 61, which play a role of connection and fixation of the output electrode connecting piece 7, enable the output electrode connecting piece 7 to be fixed to the insulating base 5. The insulation base 5 is an injection-molded rubber or plastic structure, so as to provide the insulation protection to the output electrode connecting piece 7.

Further, the conductive bracket 6 is integrally injection molded with the insulating base 5, so as to give a fixation and connection between the conductive bracket 6 and the insulating base 5. Both sides of the conductive bracket 6 are bent inwardly to form an annulus structure, the inside of which forms a cavity 62. An upper portion of the connecting members 61 is located in the cavity 62, and the remaining area in the cavity 62 except the connecting members 61 is filled with a rubber or plastic material. In addition, the middle of the top of the conductive bracket 6 is recessed to form a groove body 64. The groove body 64 is also filled with a rubber or plastic material.

The cavity 62 and the groove body 64 in the conductive bracket 6 are filled with a rubber or plastic material, thereby increasing the contact area between the conductive bracket 6 and the insulating base 5, and further improving the connection reliability between the conductive bracket 6 and the insulating base 5.

Further, third male buckles 191 are disposed at the bottom of the insulating base 5. The third male buckle 191 includes two elastic bumps at intervals that may be moved when a force is applied, so that the elastic bumps can be clamped in third female grooves 1211, thereby enabling the insulating base 5 to be fixed to the battery module frame or the case body 1.

In addition, limiting plates 51 are individually disposed on both sides of the insulating base 5 and integrally extend upwardly. The output electrode connecting piece 7 is clamped between the two limiting plates 51 so as to limit the position of the connecting piece 7, thereby preventing the output electrode connecting piece 7 from being offset when being attached to the output electrode base 19, and preventing a short circuit.

The present disclosure also provides a battery pack including a case body 1, a battery module (not shown) disposed in the case body 1, and an output electrode base 19 as described above.

Mounting grooves 121 are disposed on the inner beam 12, and the output electrode bases 19 are disposed in the mounting grooves 121. The mounting groove 121 is provided with a third female groove 1211. The third male buckle 191 on the output electrode base 19 is connected to the third female groove 1211 in a snap-fit manner, so that the output electrode base 19 is mounted to the inner beam 12.

In other embodiments, it is also possible to exchange the positions of the third male buckles 191 and the third female grooves 1211. That is, the third male buckles 191 are disposed in the mounting groove 121, and the third female grooves 1211 are disposed on the insulating base 5, which is not limited thereto.

Further, each of the output electrode connecting pieces 7 is provided with a through hole, through which a fastening member passes to connect to the connecting member 61, so that the output electrode connecting pieces 7 are fixed to the output electrode base 19. In the present embodiment, the fastening member is a bolt that matches with the press riveting nut in a threaded manner.

Specifically, two connecting members 61 in parallel are disposed on the insulating base 5. One of the connecting members 61 is connected to the output electrode connecting piece 7 by a bolt, the other one of the connecting members 61 is connected to one end of the first adapter web 81 by a bolt. The other end of the first adapter web 81 is connected to the second adapter web 82, which in turn is connected to the BUD system.

In the present embodiment, both the first adapter web 81 and the second adapter web 82 are a high-voltage copper bus bar.

## Claims

1. A battery pack comprising:
a case body (1) comprising a first chamber structure (11c); and
at least one battery module (2) disposed in the first chamber structure (11c), wherein the battery module (2) comprises a battery cell group (22) and a surrounding frame (21) disposed to surround the battery cell group (22), and the surrounding frame (21) is detachably connected to the case body (1).

2. The battery pack according to claim 1, wherein the surrounding frame (21) is connected to the case body (1) by at least one of a fixing member and a snap-fit structure.

3. The battery pack according to claim 2, wherein the fixing member comprises a first foam glue (3) soluble in a glue remover, and
a side of the surrounding frame (21) away from the battery cell group (22) is provided with a glue holding groove (213), and the first foam glue (3) is filled in the glue holding groove (213) and adhered to the case body (1).

4. The battery pack according to any one of claims 1 to 3, wherein the battery module (2) further comprises a base plate (24) at a bottom of the battery cell group (22), and
the base plate (24) and the surrounding frame (21) form a cavity, and the battery cell group (22) is disposed in the cavity.

5. The battery pack according to claim 4, wherein the battery module (2) further comprises a CCS assembly (23) disposed on the top of the battery cell group (22),
wherein the CCS assembly (23) comprises a bus bar (232) and an insulating cover (231) covering a side of the bus bar (232) away from the battery cell group (22), and
wherein the bus bar (232) is connected in series or in parallel to a plurality of battery cells (221) in the battery cell group (22); and
the insulating cover (231) is connected to at least one of the base plate (24) and the surrounding frame (21) by a snap-fit structure (25).

6. The battery pack according to claim 4, wherein at least one of the following is satisfied:
the battery pack further comprises a second foam glue (27) disposed in the cavity, wherein the second foam glue (27) adheres the battery cell group (22), the surrounding frame (21), and the base plate (24) together, and
the battery pack further comprises one or more thermal insulation layers (28) disposed on the base plate (24), and the thermal insulation layers (28) are disposed on at least one of a side of the base plate (24) close to the battery cell group (22) and a side of the base plate (24) away from the battery cell group (22).

7. The battery pack according to any one of claims 1 to 3, wherein the battery module (2) further comprises a liquid cooling assembly (26) disposed in the cavity,
wherein the liquid cooling assembly (26) comprises a plurality of liquid cooling blocks (261) in a snake-like shape, and a plurality of separation holes (262) independent of each other are defined among adjacent ones of the liquid cooling blocks (261) and configured to separate adjacent ones of the battery cells (221) in the battery cell group (22) and to wrap the battery cells (221).

8. The battery pack according to claim 5, wherein the bus bar (232) comprises a plurality of bus bar units (2323), and each of the bus bar units (2323) comprises a first conductive unit (23231) and a second conductive unit (23232); the first conductive unit (23231) is provided with a protrusion portion (2321), and the second conductive unit (23232) is provided with an abutment portion (2322);
wherein at least one of the following is satisfied:
the insulating cover (231) is connected and fixed to the base plate (24), by the insulating cover (231), the protrusion portion (2321) of the bus bar (232) is abutted against a first electrode of corresponding one of the battery cells (221) in the battery cell group (22), and the abutment portion (2322) of the bus bar (232) is abutted against a second electrode of corresponding one of the battery cells (221) in the battery cell group (22), and
the insulating cover (231) is connected and fixed to the surrounding frame (21), and, by the insulating cover (231), the protrusion portion (2321) of the bus bar (232) is abutted against a first electrode of corresponding one of the battery cells (221), and the abutment portion (2322) of the bus bar (232) is abutted against a second electrode of corresponding one of the battery cells (221).

9. The battery pack according to claim 8, wherein at least one of the following is satisfied:
hollow first observation holes (2311) are disposed on the insulating cover (231), and each of the first observation holes (2311) corresponds to the protrusion portion (2321); or
hollow second observation holes (2312) are disposed on the insulating cover (231), and each of the second observation holes (2312) corresponds to the abutment portion (2322).

10. The battery pack according to any one of claims 1 to 3, wherein the case body (1) comprises a case frame (11), a bottom guard plate (13) and an inner beam (12),
wherein the case frame (11) and the bottom guard plate (13) are connected to form the chamber structure, and the inner beam (12) is disposed in the chamber structure and fixed to at least one of the case frame (11) and the bottom guard plate (13); and
a liquid tube (133) is disposed in the inner beam (12), both ends of the inner beam (12) are connected to the case frame (11), and a side surface of the inner beam (12) away from the bottom guard plate (13) is flush with a side surface of the case frame (11) away from the bottom guard plate (13).

11. The battery pack according to claim 10, wherein the inner beam (12) divides the case frame (11) into a first frame (11a) and a second frame (11b) independent of each other, the bottom guard plate (13) comprises a first bottom guard plate (131) for covering a bottom of the first frame (11a) and a second bottom guard plate (132) for covering a bottom of the second frame (11b), the first frame (11a) and the first bottom guard plate (131) form the first chamber structure (11c), and the second frame (11b) and the second bottom guard plate (132) form a second chamber structure (11d), and
a first sealing member (151) is provided between the first bottom guard plate (131) and the first frame (11a), and a second sealing member (152) is provided between the second bottom guard plate (132) and the second frame (11b).

12. The battery pack according to claim 11, wherein a positioning rib (16) is disposed on an inner side wall of the case frame (11), and an end of the positioning rib (16) is connected to a side wall of the inner beam (12).

13. The battery pack according to claim 12, wherein at least one of the following is satisfied:
a plurality of reinforcing beams (17) are disposed on the case frame (11), an end of each of the reinforcing beams (17) is connected to the case frame (11) and another end of each of the reinforcing beams (17) is connected to a side of the inner beam away from the positioning ribs (16), and
a plurality of reinforcing plates (18) are disposed on the case frame (11) at intervals, and both ends of each of the reinforcing plates (18) are connected to the positioning ribs (16) at different sides of the case frame (11), respectively.

14. The battery pack according to any one of claims 1-13, wherein the battery pack further comprises:
an insulating base disposed on the case body; and
a conductive bracket fixed to the insulating base and electrically connected to the battery module;
wherein connecting members are provided on the conductive bracket, and at least one of the connecting members and the conductive bracket is of a step structure to limit axial movement of the connecting members.

15. The battery pack according to claim 14, wherein at least one of the following is satisfied:
at least a part of each of the connecting members is located in the insulating base, and the connecting members are riveted to the conductive bracket, and each of the connecting members comprises a press riveting nut, and a top of the press riveting nut is provided with an annular flange to form the step structure,
a cavity is disposed in the conductive bracket, at least a portion of each of the connecting members is disposed in the cavity, and the conductive bracket is filled with a material of the insulating base,
the conductive bracket is of a ring-like structure, a portion of the conductive bracket is recessed to form a groove body, and the groove body is filled with a material of the insulating base, and
the battery pack further comprises an output electrode connecting piece, the output electrode connecting piece is connected to the connecting members by a fastener to be fixed to an output electrode base, two limiting plates are disposed on opposite sides of the insulating base to limit the output electrode connecting piece, and the output electrode connecting piece is electrically connected to the battery module and the conductive bracket.
